Europäisches Patentamt

European Patent Office

Office européen des brevets

(11) Publication number: **0 064 127**
**A2**

## (12) EUROPEAN PATENT APPLICATION

(21) Application number: **82100790.3**

(22) Date of filing: **04.02.82**

(51) Int. Cl.³: **G 01 K 1/08**
**G 01 K 13/00**

(30) Priority: **01.04.81 US 249760**

(43) Date of publication of application:
**10.11.82 Bulletin 82/45**

(84) Designated Contracting States:
**BE CH DE FR GB IT LI NL SE**

(71) Applicant: **Timex Corporation**
**P.O. Box 2126**
**Waterbury, Connecticut 06720(US)**

(72) Inventor: **Schwarzschild, Jack**
**41 Revonah Avenue**
**Stamford Connecticut 06905(US)**

(74) Representative: **Hoeger, Stellrecht & Partner**
**Uhlandstrasse 14c**
**D-7000 Stuttgart 1(DE)**

(54) Electronic thermometer with integrally housed probe and coil cord.

(57) An electronic clinical thermometer with electrical circuitry (13,37) and a display (2,22) to indicate the temperature as measured by a probe (5,25), which is sheathed in the housing (1,20) containing the electrical circuitry and display. The probe leads are connected to the circuit in the housing by a coiled cord (6,26) which will stretch from a passage (16,32) in the housing when the probe is unsheathed. The probe handle nests (10,30) with the housing and covers the openings leading to the probe sheath (18,34) and the passage into which the cord retracts, so that the probe is protected and the cord hidden when the thermometer is not in use.

FIG.1

Electronic Thermometer With Integrally Housed Probe and Coil Cord

This invention relates generally to electronic clinical thermometers, and more particularly to such thermometers with probes connected to the electrical circuitry in the thermometer housing.

Electronic clinical thermometers are known which include probes
incorporating either thermistor or thermocouple elements to measure
body temperature when the probe is placed in contact with the body
tissue. In some instances, the probes are part of the housing containing the electronic circuitry and display, such as shown in U.S.
Patent 4,133,208 issued January 9, 1979 to Parlanti and as shown in
U.S. Patent 4,174,631 issued November 20, 1979 to Hammerslag. On the
other hand, thermometer probes have also been attached to the housings by flexible electric cords to facilitate usage, as exemplified
in U.S. Patent 3,729,998 issued May 1, 1973 to Mueller et al and U.S.
Patent 4,158,965 issued June 26, 1979 to Prosky. Devices supplying
external sheaths for the thermometer probes are disclosed in U.S.
Patent 4,166,389 issued September 4, 1979 to Montren and U.S. Patent
3,878,724 issued April 22, 1975 to Allen. The probes for temperature
indicating apparatus have also been sheathed in the housing of the temperature indicating apparatus itself as shown in U.S. Patent 3,872,728 issued March 25, 1975 to Joyce et al and U.S. Patent 4,121,462 issued October 24, 1978 to Morhman.

Devices have been suggested for housing flexible coiled cords in connection with telephone apparatus as shown in U.S. Patent 3,227,802 issued January 4, 1966 to Pressley, U.S. Patent 3,373,954 issued March 19, 1968 to Hilsinger and U.S. Patent 3,546,396 issued December 8, 1970 to Marcheski et al.

Lastly, U.S. Patent 3,540,283 issued November 17, 1970 to Dean shows a temperature sensor, wherein the probe and the cord are both housed within the temperature sensor apparatus beneath a hinged cover.

It would be desirable to have a compact clinical electronic thermometer, in which the probe is protected and the flexible connecting cord between probe and electrical circuitry is disposed of when not in use.

Accordingly, one object of the present invention is to provide an improved electronic clinical thermometer and removable probe assembly connected thereto by a flexible cord.

Another object of the invention is to provide an improved means for protecting the probe and cord of an electronic clinical thermometer when the probe is not in use.

Still another object of the invention is to provide an improved probe and cord assembly which is housed within a clinical electronic thermometer.

## Drawings

The invention, both as to organization and method of practice, together with further objects and advantages thereof, will best be understood by reference to the following specification, taken in connection with the accompanying drawings, in which:

FIG. 1 is a perspective view of the electronic clinical thermometer showing the temperature probe removed from the housing for use,

FIG. 2 is a perspective view of the thermometer with the probe and cord in place when the thermometer is not in use,

FIGS. 3, 4 and 5 are front elevation view, side elevation view, and cross-sectional view, respectively, of the thermometer with probe and cord partially withdrawn, and

FIGS. 6, 7 and 8 are front elevation view, side elevation view and cross-sectional of a modified arrangement with the probe and cord partially withdrawn.

## Summary of the Invention

Briefly stated, the invention is practiced by providing an electronic clinical thermometer with an electronic circuit and display means for displaying the temperature, a housing enclosing the electronic circuit and display means having at least one opening leading to an internal passage, a temperature probe having a handle with a probe body adapted to be inserted into the housing, a cord connecting the probe to the electronic circuit and display means and adapted to retract into the passage, the probe handle being arranged to cover the opening in the housing when the probe is replaced.

4                       0064127

## Description of the Preferred Embodiment

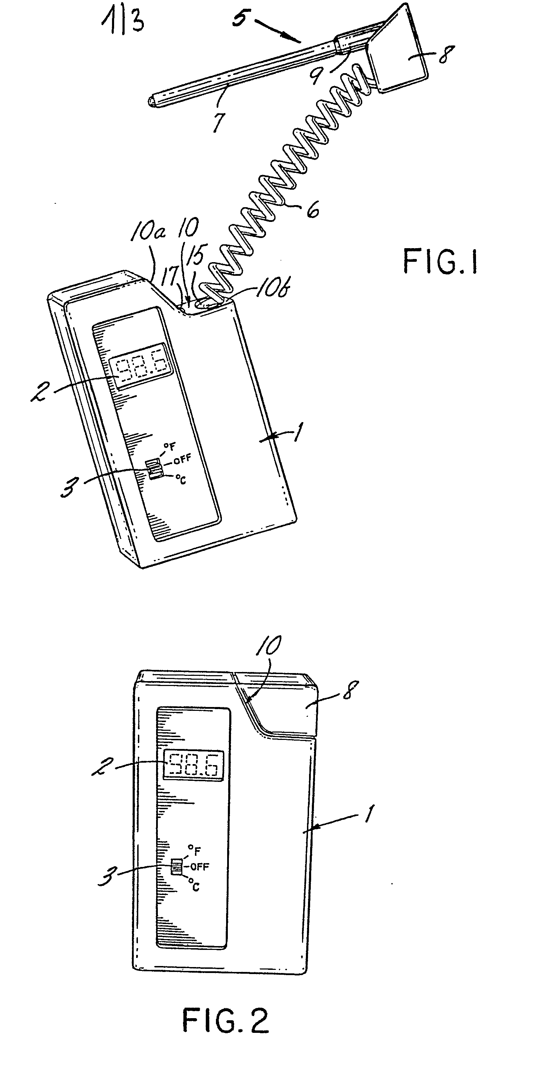

Referring now to Fig. 1 of the drawing, a housing 1 for an electronic clinical thermometer encloses an electronic circuit and power supply such as a battery (not shown) and is arranged to display the temperature on a display 2. An operating switch 3 is positioned in off position when the thermometer is not in use, and is moved either to indicate the temperature in degrees Fahrenheit or degrees Centigrade.

A temperature probe shown generally as 5 is removable from the housing 1 and is electrically connected thereto by the conductors in a coiled electrical cord 6, cord 6 is of a type which is commercially available, and acts like a spring so that it is adapted to retract after it is stretched out. The probe includes a probe body 7, a probe handle 8, which is shaped so as to nest with a complementary mating recess 10 defined in the housing 1. The details of probe body 7 are not material to the present invention, since the probe may be one of the any commonly employed types which are commercially available having either a thermistor or a thermocouple in its tip. The probe body 7 may be permanently affixed to handle 8 or it may be arranged to be disposable and replaced by the user. The probe body is held in a boss portion 9 projecting from the probe handle. The probe body has internal leads connected to a temperature responsive element in its tip (not shown). A suitable probe construction having low thermal mass is disclosed in my copending application (PI-813) for an improved "Thermocouple Probe for Clinical Electronic Thermometer" filed of even date herewith and assigned to the present assignee.

Similarly, the electronic circuit and display means employed in the electronic clinical thermometer are of commercially available types arranged to display the temperatures sensed by the probe in response to electrical signals received over external leads, the details of which are not material to the present invention. The display may be one of the commonly employed types such as LED or LCD, preferably with a digital-type presentation.

Referring to Fig. 2 of the drawing, the thermometer is shown as it appears when it is not in use with the probe handle 8 nesting with recess 10 of the housing. The precise shape of handle 8 is not critical, and it should be readily apparent that handle 8 can either fit into a recess or can overlap or nest in other ways with respect to the housing 1.

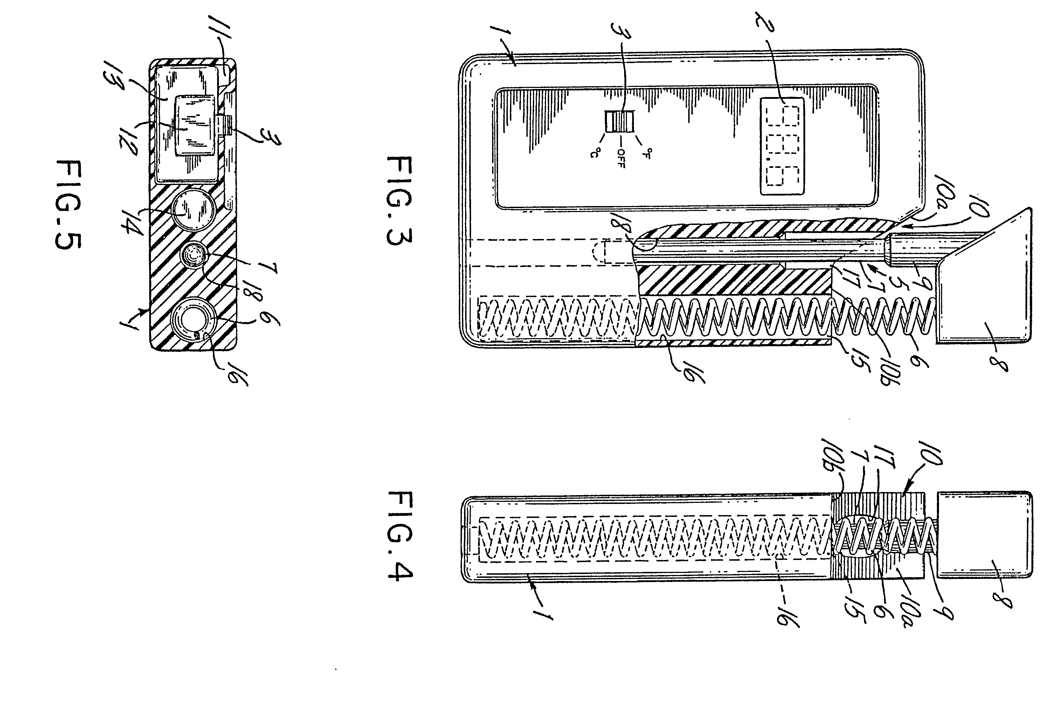

Referring now to Figs. 3, 4 and 5 of the drawing, it is seen that the thermometer includes a central cavity 11 containing a switch 12, electronic circuitry 13 and battery 14. The nesting recess 10 is comprised of an inclined flat surface 10a and a connected flat surface 10b. A first opening 15 in the surface 10b leads to a internal cylindrical passage 16 extending substantially along the length of the housing. A second opening 17 leads to a second substantially cylindrical passage 18 extending substantially across the housing. The coiled spring cord 6 is attached by a clip (not shown) in the bottom of passage 16. The passages 17, 18 are shaped to accommodate the length of probe body 7 and its connecting boss 9. The hole 15 and passage 16 accommodate the retracted spring cord 6. It is particularly important to note that the probe handle 8 covers the holes 15, 17 in the housing leading to the passages 16, 18 respectively when the probe handle 8 is fully nested.

## Modification

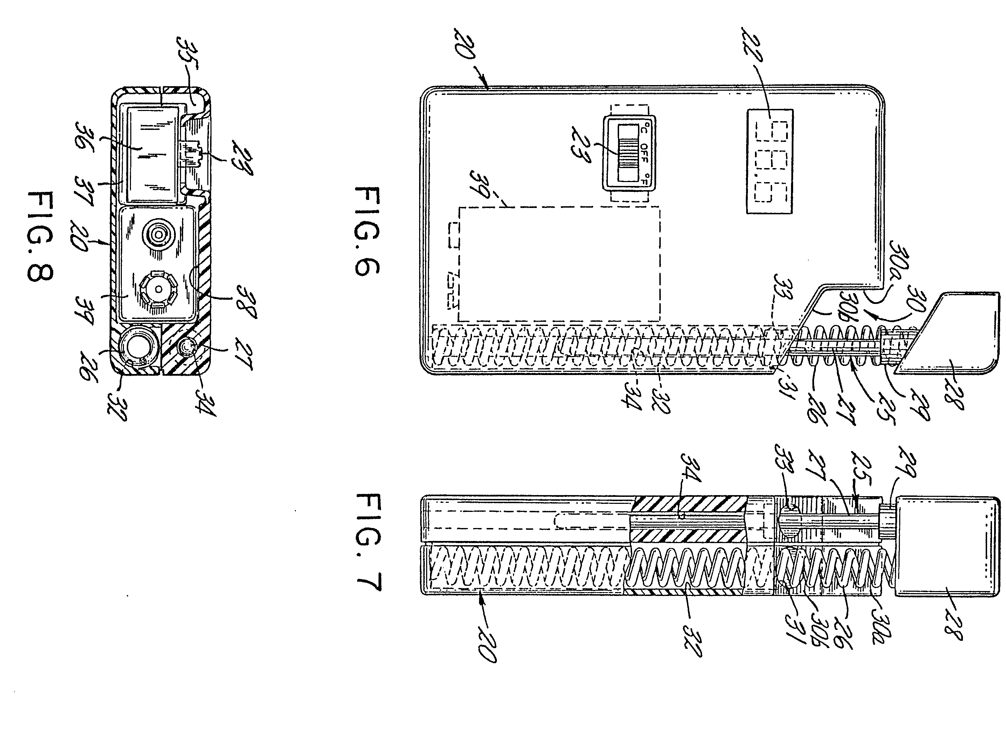

Referring now to Figs. 6-8 of the drawing, a modified form of the invention is illustrated. In this arrangement the probe and coil cord are side by side with respect to the probe handle rather than the fore-and-aft arrangement shown in Figs. 3-5. In the modified form of the invention the thermometer may be of lesser width and thicker in depth, whereas in the arrangements shown in Figs. 3-5 the width will be thicker but the depth will be less.

Referring to Figs. 6, 7 and 8, a housing 20 encloses electronic circuitry, power source and means to provide display of the temperature via a display 22. An operating switch 23 turns the thermometer on to record either degrees Fahrenheit or degrees Centigrade. The removable probe assembly, shown generally at 25, is connected to the thermometer by a coil spring cord 26 as before. A probe body 27 is attached to a handle 28 at a boss 29. The handle 28 nests in a recess 30 which is comprised of a vertical flat surface 30a and an inclined flat surface 30b. A first hole 31 in the inclined surface 30b leads to an internal passage 32 housing the retracted cord 26. A second hole 33 leads to an internal passage 34 housing the probe 27. The coil cord is attached by a clip (not shown) in the bottom of passage 32. The cord is insulated and has internal conductors connected between leads in the probe and the electronic circuitry in the housing.

Reference to the cross sectional view of Fig. 8 shows that the housing includes a cavity 35 containing the switch assembly 36, the electronic circuitry 37 and a compartment 38 for the battery 39.

7

0064127

## Operation

The operation of the probe in Figs. 3-5 and the probe in Figs. 7-8 is the same. When the probe is to be used, it is grasped by the handle and pulled from the housing, unsheathing the probe and stretching the spring coil cord. After use, the probe is cleaned and, as the probe is sheathed, the cord retracts into the passage. When the probe handle is fully nested, it covers the holes leading to the probe and cord passage. This provides means to protect the probe and cord and present a neat sanitary clinical electronic thermometer.

While there has been shown what is considered to be the preferred emobodiment of the invention, other modifications will occur to those skilled in the art and it is desired to secure in the appended claims all such modifications as fall within the true spirit and scope of the invention.

Claims

1. In an electronic clinical thermometer having an electronic circuit (13,37) and display (2,22) adapted to display temperature, and a housing (1,20) enclosing said electronic circuit and display, the improvement comprising:

at least one opening in said housing leading to a first internal passage (16,32),

a temperature probe (5,25) having a handle (8,28) and having a probe body (7,27) extending from said handle and adapted to be inserted into the housing,

an electrical cord (6,26) connected at one end to the handle and at the other end to the housing inside said first passage and adapted to retract into the passage when the probe is replaced,

said handle having portions (8,28) arranged to cover said housing opening, whereby the cord is hidden when the probe is inserted into the housing and the cord is retracted.

2. An electronic clinical thermometer in accordance with claim 1, wherein said handle and said housing include complementary portions (10a, 10b, 30a, 30b) adapted to nest with respect to one another, the nesting portion of the handle being adapted to cover said housing opening.

3. The combination according to claim 1, wherein said housing defines a second opening (17,33) leading to a second internal passage (18,34) extending substantially parallel to said first passage and adapted to receive said temperature probe body.

4. The combination according to claim 1, wherein said electronic circuit and display means is responsive to electrical signals received over external leads, wherein said probe body has leads therein together with temperature responsive means, and wherein said cord is a coiled spring cord having conductors connected between said probe leads and said electronic circuit and display means.

5. The combination according to claim 1, wherein said housing defines a recess wherein the handle is adapted to nest within said recess, wherein said handle defines a complementary nesting portion, said opening being located in said recess and covered by said nesting portion of the handle.

6. The combination according to claim 5, wherein a second opening is located in the recess and leading to a second internal passage in said housing extending substantially parallel to said first passage and also covered by the nesting portion of the handle.

7. In an electronic clinical thermometer having electronic circuit and display adapted to display temperature in response to electrical signals received over external leads attached to said electronic circuit and display means, and a housing enclosing said electronic circuit and display, the improvement comprising:

a recess defined in said housings,

a first opening located in the recess and leading to a first internal passage extending substantially across one dimension of said housing,

a second opening located in the recess leading to a second internal passage extending substantially parallel to said first passage,

a temperature probe having a handle with a nesting portion adapted to nest within the recessed portion of the housing and having a probe body extending from said handle and adapted to be inserted into said second passage, said probe body having leads therein,

a coiled electrical cord fastened at one end to said handle and at the other end to said housing in said first passage, said cord being adapted to retract into the passage and containing conductors connected between said probe leads and said electronic circuit and display means,

said nesting portion of the handle being adapted to cover first and second housing openings, whereby the cord and probe body are hidden when the probe is inserted into the housing.

0064127

1|3

FIG.1

FIG.2

FIG. 3

FIG. 4

FIG. 5

313

0064127

FIG.6

FIG. 7

FIG.8